# EUROPÄISCHE PATENTSCHRIFT

(11) **EP 0 598 864 B1**
(45) Veröffentlichungstag und Bekanntmachung des Hinweises auf die Patenterteilung: **25.03.1998**
(21) Anmeldenummer: 93909647.5
(22) Anmeldetag: 13.05.1993
(51) Int. Cl.: C08J 5/24, B29B 15/12

(54) **KOMPRIMIERBARES PREPREG AUF DER BASIS VON MIT DUROMEREN KUNSTHARZEN IMPRÄGNIERTEN FLÄCHIGEN TRÄGERMATERIALIEN**
COMPRESSIBLE PREPREG ON THE BASIS OF FLAT SUPPORT MATERIALS IMPREGNATED WITH DUROMER SYNTHETIC RESINS
PREIMPREGNE COMPRESSIBLE A BASE DE MATERIAUX DE SUPPORT PLATS IMPREGNES DE RESINES SYNTHETIQUES DUROMERES

(30) Priorität: 15.05.1992 AT 990/92
(43) Veröffentlichungstag der Anmeldung: 01.06.1994
(73) Patentinhaber: ISOVOLTA Österreichische Isolierstoffwerke Aktiengesellschaft, 2355 Wiener Neudorf (AT)
(72) Erfinder: ZIMICS, Bela, A-8144 Tobelbad (AT); ORTHOFER, Willibald, A-8142 Wundschuh (AT)
(86) Internationale Anmeldenummer: AT9300082
(87) Internationale Veröffentlichungsnummer: WO9323461

(56) Entgegenhaltungen:
- EP-A- 0 197 618
- EP-A- 0 297 524
- EP-A- 0 334 499
- JP-A-61 246 050
- US-A- 3 881 978
- US-A- 4 024 305

## Beschreibung

Die Erfindung betrifft ein komprimierbares Prepreg auf der Basis von mit duromeren Kunstharzen imprägnierten flächigen Trägermaterialien, welches eine erste, direkt auf dem flächigen Trägermaterial aufgebrachte Kunstharzschicht im C-Zustand und eine auf die erste Kunstharzschicht aufgebrachte zweite Kunstharzschicht im B-Zustand aufweist, ein Verfahren zu dessen Herstellung sowie dessen Verwendung.

### Stand der Technik

Prepregs der eingangs genannten Art sind aus der JP-A-61 246050 bekannt, da gemäß dieser Lehre Glasfaservliese mit Imprägnierharzen unterschiedlicher Aushärtung geoffenbart sind. So befindet sich das eingesetzte Kunstharz auf Basis von 1,2-Polybutadien im C-Zustand, während das eingesetzte Epoxyharz im B-Zustand vorliegt. Dabei erhöhen die elastomeren Eigenschaften von 1,2-Polybutadien die Rißbeständigkeit des Trägermaterials und verbessern somit die Weiterverarbeitbarkeit des Prepregs, während die eingesetzten Epoxyharze eine etwaige Verwendung als Elektroisolationsmaterial ermöglichen.

Ferner ist es aus der US-A 3881978 sowie der EP-A-297524 vorbekannt, Trägermaterialien mit duromeren Kunstharzen wie Polyester- oder Epoxyharzen zu beschichten. In beiden Fällen liegen die duromeren Kunstharze im B-Zustand vor.

Ein Imprägnierverfahren unter Verwendung von Epoxyharzen ist aus der US-A-4024305 bekannt. Es handelt sich dabei um ein in zwei Schritten geführtes resin-rich Verfahren mit jeweils nachgeschalteter Trocknung. Die Harze werden dadurch zu 80 - 85% - das entspricht explizit einem C-Zustand - ausgehärtet.

Ferner ist es bekannt, Prepregs auf Basis von Glasfasergeweben, welche mit in der Hitze härtbaren, duromeren Kunstharzen imprägniert sind, zur Herstellung der elektrischen Isolationen wie Trafowicklungen einzusetzen. Diese Prepregs werden nun zur Herstellung der genannten elektrischen Isolationen beispielsweise in Bandform auf ein Metallband aufgebracht und unter Anwendung hoher Zugspannungen auf einen Wickeldorn aufgebracht, welcher anschließend in einen beheizten Ofen übergeführt wird. Bei diesen erhöhten Temperaturen wird das im B-Zustand befindliche Kunstharz des Prepregs in den C-Zustand übergeführt. Da jedoch dieser Metall-Prepregverbund unter hoher Zugspannung steht, ist es möglich, daß insbesondere an unebenen Metallstellen das Harz vor dessen Aushärtung aus dem Glasfasergewebe wegfließt, sodaß unimprägnierte Glasfaserlagen zwischen den Metallschichten liegen. Dadurch wird schon bei der Erstbenutzung der Trafowicklungen ein Kurzschluß erzeugt.

### Darstellung der Erfindung

Der Erfindung liegt daher die Aufgabe zu Grunde, ein komprimierbares Prepreg der eingangs genannten Art anzugeben, welches leicht verarbeitbar ist und gleichzeitig zufriedenstellende Elektroisolationseigenschaften aufweist.

Erfindungsgemäß wird ein Prepreg der eingangs genannten Art vorgeschlagen, welches dadurch gekennzeichnet ist, daß das duromere Kusntharz ein Epoxy- oder Polyesterharz ist.

Ein weiterer Vorteil der Erfindung besteht darin, daß das Prepreg als flächiges Trägermaterial ein Gewebe aus organischen Fasern, vorzugsweise Aramidfasern, enthält.

Eine weitere Variante der Erfindung ist, daß das Prepreg als flächiges Trägermaterial ein Gewebe aus anorganischen Fasern, insbesondere Glasfasern, enthält.

Ein weiterer Vorteil der Erfindung besteht darin, daß das Prepreg als flächiges Trägermaterial ein Vlies aus organischen Fasern, vorzugsweise Aramidfasern, enthält.

Eine andere Variante der Erfindung ist, daß das Prepreg als flächiges Trägermaterial ein Vlies aus anorganischen Fasern wie Glasfasern enthält.

Das erfindungsgemäße Prepreg wird durch ein Verfahren hergestellt, welches dadurch gekennzeichnet ist, daß das flächige Trägermaterial in eine mit einer aushärtbaren Kunstharzlösung gefüllten ersten Tränkwanne geführt wird, daß dieses imprägnierte Trägermaterial über mehrere Umlenkwalzen eine Heizzone passiert, wobei das Kunstharz in den B-Zustand übergeführt wird, daß anschließend dieser Verbund (7) eine zweite, mit einer aushärtbaren Kunstharzlösung (5') gefüllte Tränkwanne (6') passiert, sodaß eine zweite klebrige Harzschicht erzeugt wird und daß der derart gebildete Verbund 7' nochmals die Heizzone (9) passiert, sodaß die zuerst aufgetragene Kunstharzschicht vom B-Zustand in den C-Zustand und die zweite Kunstharzschicht in den B-Zustand übergeführt werden.

Die Erfindung betrifft auch die Verwendung eines Prepregs zur elektrischen Isolierung der Spulen von elektrischen Maschinen, wobei das im B-Zustand vorliegende Kunstharz der zweiten Kunstharzschicht ebenso in den C-Zustand übergeführt wird.

### Kurze Beschreibung der Zeichnungen im Zusammenhang mit einem Weg zur Ausführung der Erfindung

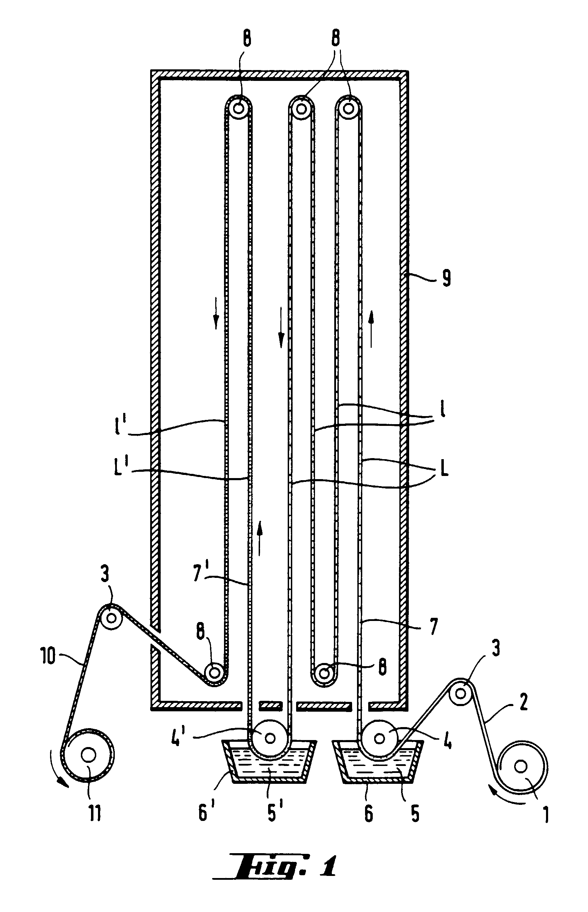

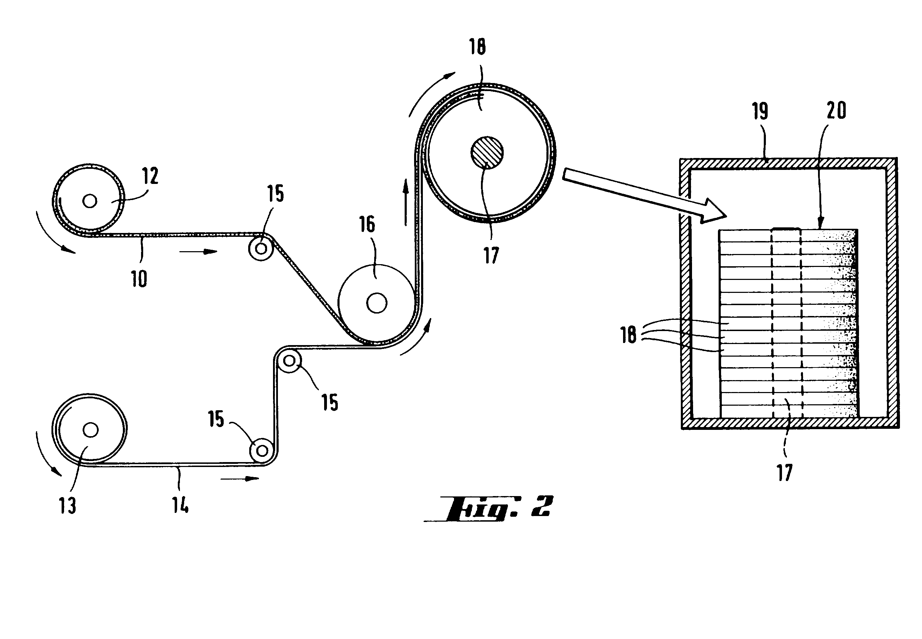

Die Herstellung des erfindungsgemäßen Prepregs erfolgt beispielsweise mit Vorrichtungen gemäß den Figuren 1 und 2.

Figur 1 zeigt eine Imprägnieranlage bestehend aus zwei Tränkwannen und einem Imprägnierturm.

Figur 2 zeigt eine Wickelvorrichtung für eine Metallfolie und das erfindungsgemäße Prepreg, der ein Ofen nachgeschaltet werden kann.

Der Imprägniervorgang zur Herstellung des erfindungsgemäßen Prepregs kann beispielsweise gemäß einer Vorrichtung nach Figur 1 erfolgen.

Dabei wird von der Vorratsrolle 1 beispielsweise ein Glasfasergewebe 2 abgezogen und über die Transportrolle 3 einer Auftragswalze 4 zugeführt. Die Auftragswalze 4 taucht in eine mit einer aushärtbaren Kunstharzlösung 5 gefüllte Tränkwanne 6 ein. Die Kunstharzlösung 5 kann beispielsweise aus in Ketonen gelösten Epoxyharzen bestehen, wobei ihre Temperatur während der Imprägnierung auf Raumtemperatur gehalten wird. Anschließend wird der aus Glasfasergewebe und Kunstharz bestehende Verbund 7 über mehrere Umlenkwalzen 8 im Imprägnierturm 9, dessen Temperatur auf etwa 120° bis 130°C gehalten wird, geführt, wobei der Verbund 7 die zwischen den Auftragswalzen und den Umlenkrollen gebildeten Weglängen L und die zwischen zwei Auftragswalzen gebildeten Weglängen 1 durchläuft. Dabei durchdringt das Kunstharz das Glasfasergewebe und wird ferner aufgrund der erhöhten Temperatur im Imprägnierturm in den B-Zustand übergeführt. Anschließend wird dieser Verbund über eine weitere Auftragswalze 4', die in eine mit einer aushärtbaren Kunstharzlösung 5' gefüllte Tränkwanne 6' eintaucht, geführt. Diese Kunstharzlösung wird auf Raumtemperatur gehalten und kann dieselbe Konzentration wie die der Kunstharzlösung 5 aber auch eine zu dieser unterschiedliche Konzentration aufweisen. Ferner kann die Kunstharzlösung 5' auch ein zu dem in der Kunstharzlösung 5 unterschiedliches Kunstharz, beispielsweise ein Polyesterharz, aufweisen. Anschließend durchläuft der Verbund 7' die zwischen der Auftragswalze 4' und einer Umlenkrolle 8 liegende Weglänge L' und die zwischen zwei Umlenkrollen 8 liegende Weglänge 1'. Aufgrund der erhöhten Temperatur im Imprägnierturm ist im endgefertigten Prepreg 10 die in Form der ersten Kunstharzlösung 5 aufgebrachte Kunstharzschicht in den C-Zustand übergeführt worden, während sich die in Form der zweiten Kunstharzlösung 5' aufgebrachte Kunstharzschicht noch im B-Zustand befindet. Dieses Prepreg 10 wird nun auf eine Vorratsrolle 11 aufgewickelt, auf der es bis zu Weiterverarbeitung gelagert werden werden kann.

Eine mögliche weiterverarbeitung des Prepregs 10 kann mit Hilfe einer Vorrichtung nach Figur 2 erfolgen. Dabei werden von der Vorratsrolle 12 das erfindungsgemäße Prepreg 10 und von der Vorratsrolle 13 eine Metallfolie 14, beispielsweise eine Kupferfolie, abgezogen und über Transportrollen 15 der Umlenkwalze 16 zugeführt, an der die Materialien 10 und 14 miteinander bei Raumtemperatur in Kontakt gebracht und anschließend auf den Wickeldorn 17 aufgewickelt werden, wodurch eine Zugspannung auf die Materialien wirkt. Diese unter Zugspannung stehenden Metall-Prepregwicklungen 18 werden anschließend abgelängt und in einen auf etwa 130° bis 160°C geheizten Ofen 19 übergeführt, wobei auch die zweite im B-Zustand befindliche Kunstharzschicht in den C-Zustand übergeführt wird. Bei bekannten Prepregs, die lediglich eine Kunstharzschicht aufweisen, hat es sich gezeigt, daß ab einer bestimmten Zugspannung das Harz beim Aushärten vom Trägermaterial weggequetscht wurde, sodaß das nicht imprägnierte Trägermaterial direkt auf der Metallfolie auflag, was bei der Weiterwendung beispielsweise als Wicklungen in Transformatoren zu Kurzschlüssen führte.

Nach dem Aushärten wird die Stirnseite der Wicklung 20 vergossen und der Wickeldorn 17 entfernt, wodurch ein Gerüst erzeugt wird, welches als Wicklung in Transformatoren eingesetzt werden kann.

### Gewerbliche Verwertbarkeit

Derartige Prepregs werden zur Herstellung der elektrischen Isolationen von Trafowicklungen eingesetzt.

## Patentansprüche

1. Komprimierbares Prepreg auf der Basis von mit duromeren Kunstharzen imprägnierten flächigen Trägermaterialien, welches eine erste, direkt auf dem flächigen Trägermaterial aufgebrachte Kunstharzschicht im C-Zustand und eine auf die erste Kunstharzschicht aufgebrachte zweite Kunstharzschicht im B-Zustand aufweist, dadurch gekennzeichnet, daß das duromere Kunstharz ein Epoxy- oder Polyesterharz ist.

2. Prepreg nach Anspruch 1, dadurch gekennzeichnet, daß es als flächiges Trägermaterial ein Gewebe aus organischen Fasern enthält.

3. Prepreg nach Anspruch 2, dadurch gekennzeichnet, daß die organischen Fasern Aramidfasern sind.

4. Prepreg nach Anspruch 1, dadurch gekennzeichnet, daß es als flächiges Trägermaterial ein Gewebe aus anorganischen Fasern enthält.

5. Prepreg nach Anspruch 4, dadurch gekennzeichnet, daß die anorganischen Fasern Glasfasern sind.

6. Prepreg nach Anspruch 1, dadurch gekennzeichnet, daß es als flächiges Trägermaterial ein Vlies aus organischen Fasern enthält.

7. Prepreg nach Anspruch 6, dadurch gekennzeichnet, daß die organischen Fasern Aramidfasern sind.

8. Prepreg nach Anspruch 1, dadurch gekennzeichnet, daß es als flächiges Trägermaterial ein Vlies aus anorganischen Fasern enthält.

9. Prepreg nach Anspruch 8, dadurch gekennzeichnet, daß die an organischen Fasern Glasfasern sind.

10. Verfahren zur Herstellung eines Prepregs nach einem der Ansprüche 1 bis 9, dadurch gekennzeichnet, daß das flächige Trägermaterial (2) in eine mit einer aushärtbaren Kunstharzlösung (5) gefüllten ersten Tränkwanne (6) geführt wird, daß dieses imprägnierte Trägermaterial über mehrere Umlenkwalzen (8) eine Heizzone (9) passiert, wobei das Kunstharz in den B-Zustand übergeführt wird, daß anschließend dieser Verbund (7) eine zweite, mit einer aushärtbaren Kunstharzlösung (5') gefüllte Tränkwanne (6') passiert, sodaß eine zweite klebrige Harzschicht erzeugt wird und daß der derart gebildete Verbund 7' nochmals die Heizzone (9) passiert, sodaß die zuerst aufgetragene Kunstharzschicht vom B-Zustand in den C-Zustand und die zweite Kunstharzschicht in den B-Zustand übergeführt werden.

11. Verwendung eines Prepregs gemäß einem der Ansprüche 1 bis 9, dadurch gekennzeichnet, daß man das Prepreg zur elektrischen Isolierung der Spulen von elektrischen Maschinen einsetzt, wobei das im B-Zustand vorliegende Kunstharz der zweiten Kunstharzschicht ebenso in den C-Zustand übergeführt wird.

## Claims

1. A compressible prepreg based on planar support materials which are impregnated with thermosetting synthetic resins, which has a first synthetic resin layer applied directly to the planar support material in the C stage and a second synthetic resin layer applied to the first synthetic resin layer in the B stage, characterised in that the thermosetting resin is an epoxy resin or polyester resin.

2. A prepreg according to Claim 1, characterised in that as planar support material it contains a fabric of organic fibres.

3. A prepreg according to Claim 2, characterised in that the organic fibres are aramide fibres.

4. A prepreg according to Claim 1, characterised in that as planar support material it contains a fabric of inorganic fibres.

5. A prepreg according to Claim 4, characterised in that the inorganic fibres are glass fibres.

6. A prepreg according to Claim 1, characterised in that as planar support material it contains a fleece of organic fibres.

7. A prepreg according to Claim 6, characterised in that the organic fibres are aramide fibres.

8. A prepreg according to Claim 1, characterised in that as planar support material it contains a fleece of inorganic fibres.

9. A prepreg according to Claim 8, characterised in that the inorganic fibres are glass fibres.

10. A method of producing a prepreg according to any one of Claims 1 to 9, characterised in that the planar support material (2) is guided into a first impregnation bath (6) filled with a curable synthetic resin solution (5), in that this impregnated support material passes over a plurality of deflection rollers (8) through a heating zone (9), wherein the synthetic resin is converted into the B stage, in that subsequently this composite (7) passes through a second impregnation bath (6') filled with a curable synthetic resin solution (5') so that a second adhesive resin layer is produced, and in that the composite (7') thus formed passes again through the heating zone (9) so that the first applied synthetic resin layer is converted from the B stage into the C stage and the second synthetic resin layer is converted into the B stage.

11. Use of a prepreg according to any one of Claims 1 to 9, characterised in that the prepreg is used for electrical insulation of the coils of electric machines, wherein the synthetic resin of the second synthetic resin layer present in the B stage is also converted into the C stage.

## Revendications

1. Pré-imprégné comprimable à base de matériau support plat imprégné avec des résines synthétiques thermodurcissables, qui présente une première couche de résine synthétique appliquée directement sur le matériau support plat et se trouvant à l'état C et présente une deuxième couche de résine synthétique appliquée sur la première de résine synthétique et se trouvant à l'état B, caractérisé en ce que la résine synthétique thermodurcissable est une résine époxy ou une résine polyester.

2. Pré-imprégné selon la revendication 1, caractérisé en ce qu'il contient comme matériau support plat un textile constitué de fibres organiques.

3. Pré-imprégné selon la revendication 2, caractérisé en ce que les fibres organiques sont des fibres d'aramide.

4. Pré-imprégné selon la revendication 1, caractérisé en ce qu'il contient comme matériau support plat un textile constitué de fibres non-organiques.

5. Pré-imprimé selon la revendication 4, caractérisé en ce que les fibres non-organiques sont des fibres de verre.

6. Pré-imprégné selon la revendication 1, caractérisé en ce qu'il contient à titre de matériau support plat un nappe de fibres constitué de fibres organiques.

7. Pré-imprégné selon la revendication 6, caractérisé en ce que les fibres organiques sont des fibres aramides.

8. Pré-imprégné selon la revendication 1, caractérisé en ce qu'il contient comme matériau support plat un nappe de fibres constitué de fibres non-organiques.

9. Pré-imprégné selon la revendication 8. caractérisé en ce que les fibres non-organiques sont des fibres de verre.

10. Procédé de fabrication d'un pré-imprégné selon l'une des revendication 1 à 9, caractérisé en ce que le matériau support plat (2) est passé dans un premier bac d'imprégnation (6) rempli d'une solution de résine synthétique (5) durcissable, en ce que ce matériau support imprégné est passé par plusieurs rouleaux de renvoi (8), une zone de chauffage (9), la résine synthétique étant passée à l'état B, en ce qu'ensuite ce composite (7) est passé dans un deuxième bac d'imprégnation (6') rempli d'une solution de résine synthétique durcissable (5'). de manière que soit produite une deuxième couche de résine adhésive, et en ce que le composite (7') ainsi constitué est passé une fois encore dans la zone de chauffage (9). de manière que la couche de résine synthétique ayant été appliquée la première soit passée de l'état B à l'état C et que la deuxième couche de résine synthétique soit passée à l'état B.

11. Utilisation d'un pré-imprégné selon l'une des revendications 1 à 9, caractérisé en ce qu'on utilise le pré-imprégné pour l'isolation électrique des bobines de machines électriques, la résine synthétique, se présentant à l'étape B, de la deuxième couche de résine synthétique étant également passée à l'état C.
